(19) Europäisches Patentamt
European Patent Office
Office européen des brevets

(11) **EP 3 195 024 B1**

(12) **EUROPEAN PATENT SPECIFICATION**

(45) Date of publication and mention
of the grant of the patent:
**17.11.2021 Bulletin 2021/46**

(51) Int Cl.:
***G02B 1/11*** *(2015.01)*     ***G02B 1/111*** *(2015.01)*
***G02B 1/118*** *(2015.01)*

(21) Application number: **15754388.5**

(22) Date of filing: **14.08.2015**

(86) International application number:
**PCT/US2015/045319**

(87) International publication number:
**WO 2016/028641 (25.02.2016 Gazette 2016/08)**

(54) **FLEXIBLE AND TUNABLE ANTI-REFLECTION SKIN**

FLEXIBLE UND EINSTELLBARE ANTIREFLEKTIERENDE HAUT

REVÊTEMENT ANTI-RÉFLÉCHISSANT SOUPLE ET RÉGLABLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.08.2014 US 201414466935**

(43) Date of publication of application:
**26.07.2017 Bulletin 2017/30**

(73) Proprietor: **Sunlight Aerospace Inc.
Edison, NJ 08817 (US)**

(72) Inventors:
• **BRUCE, Allan James
Scotch Plains, NJ 07076 (US)**
• **FROLOV, Sergey
Murray Hill, NJ 07974 (US)**
• **CYRUS, Michael
Castle Rock, CO 80104 (US)**

(74) Representative: **Knowles, James Atherton et al
Script IP Limited
Turnpike House
18 Bridge Street
Frome, Somerset BA11 1BB (GB)**

(56) References cited:
**EP-A1- 0 945 254**     **WO-A2-99/36262**
**US-A- 5 783 049**     **US-A1- 2010 062 217**
**US-A1- 2013 004 711**     **US-A1- 2013 044 282**

• **Anonymous: "Anti-Reflection (AR) Coatings |
Edmund Optics", , 11 June 2019 (2019-06-11),
XP055595343, Retrieved from the Internet:
URL:https://www.edmundoptics.com/resources
/application-notes/optics/anti-reflection-
coatings/ [retrieved on 2019-06-11]**
• **GUANJUN TAN ET AL: "Broadband antireflection
film with moth-eye-like structure for flexible
display applications", OPTICA, vol. 4, no. 7, 20
July 2017 (2017-07-20), page 678, XP055754309,
US ISSN: 2334-2536, DOI:
10.1364/OPTICA.4.000678**

**Description**

**FIELD OF INVENTION**

The present invention relates to the structure and functionality of a freestanding or self-supporting anti-reflection (AR) skin, which is flexible and tunable. The skin can provide an interface between different media whereupon it performs an analogous function to a deposited AR coating. Illustrative targeted applications include non-planar, mobile or adaptive-shape devices or structures.

**BACKGROUND**

Specular Reflection of Light at Interfaces

From optics theory, when incident light of wavelength (lambda), intensity (I) and angle of incidence (theta) encounters an interface between two media with different refractive indices (ni and $n_2$), it is partially reflected and partially transmitted. Phenomena such as absorption and, or diffuse reflection (scattering) may also be evident.
The intensity of the specular reflected light depends on both the wavelength and angle of incidence. The wavelength dependence correlates with refractive index, while the angular dependence may be described by Fresnel Reflection. The reflection coefficient (R) of light at a non-conducting interface between two media can be approximated by;

$$R(theta) = R_0 + (1-R_0) (1-Cos(theta))^5 \ldots\ldots(1)$$

Where, Ro is the reflection at normal incidence (theta=0) and is given by,

$$R_0 = ((n_2-n_1)/(n_2+n_1))^2 ------ (2)$$

If the interface includes an optical component, or device, this reflection may result in significant system inefficiency. For example, more than 30% of normally incident, light can be reflected from the surface of a bare c-Si (n~3.5) photovoltaic (PV) device in air (n~1) leading to a reduction in energy harvesting potential. The technology of anti-reflection (AR) coatings has been developed to address analogous issues for transmitting (e.g. windows and lenses) or active (e.g. LEDs and PV cells) optical devices. For transmitting devices, reflections from both the top and bottom interfaces are relevant to performance.

AR Coatings

AR coatings are typically deposited directly on the surface of an optical component or device in order to reduce the reflectance of incident light of desired wavelength(s) and thus improve the net system efficiency of the optical component. A wide range of deposition methods have been used and a number of different AR coating structures are commonly employed including:
Index Profiled AR coatings: Single-step, multi-step and graded index approaches have been used. Although, the introduction of an intermediate layer(s), with a refractive index lying between the two primary media, results in reflections at each added interface, the net reflectance can be lower. For a single-step AR coating, an intermediate material with a geometric mean index of $(n_1.n_2)^{1/2}$ gives the lowest theoretical reflection. Multi-layers with incremental index steps can also be employed or continuously graded index layers which do not have intermediate reflective interfaces. The main challenge for multi-step and graded approaches is the availability of suitable materials to bridge the primary index gap, which are often between air (n~1) and glass (n~1.5) or semiconductor (n>3) elements. Ideally, the coatings and their structure should not introduce significant additional losses (e.g. from absorption or scattering) which can offset the benefits of reducing the reflection.
Interference Based AR Coatings: Single and multi-step interference coatings can be designed which produce out-of phase reflections from intermediate interfaces. These reflections can destructively interfere and null the primary reflection from the first interface. For a single layer coating, ~¼ wavelength thick, with a mean geometric index, the center wavelength reflection is theoretically zero. Multi-layer interference solutions typically employ precision stacks of thin, alternating low (e.g. SiO2) and high index (e.g.TiO2) layers. Such a multi-layer approach can produce broadband performance over a range of wavelengths. However, interference layers are commonly made from brittle materials which limit their usefulness as will be described below.
Nano-structured or Nano-particulate AR Coatings: These AR coatings are typically implemented by the deposition, imprinting or etching of sub-optical (e.g < 100 nm) particles, or structures. With this dimensionality, the resulting coatings can have effective refractive indices determined by the air/material porosity, and may thus provide a better index match to air than traditional dense coatings. Examples include deposited single-layer meso-porous silica nano-particles and bio-inspired "Moth-eye" structures. By grading the porosity through the coating, for example using protruding cone nano-structures, the effective index can be graded through the coating. Surface nano-structures can also impart wide-angle performance.

Composite AR Coatings: Examples of composite AR coatings for broadband or wide-angle performance include (i) sequentially deposited layers with stepped refractive indices made by adjusting the loading of high-index dielectric nano-particles in low index resins and (ii) nano-structured layers on top of multi-layer interference structures. US-A-2013/004711 discloses a self-supporting film that has an anti-reflection function and a rugged-structure layer having periodic rugged shapes formed on at least one surface. EP-A-0 945 254 discloses a material which is suitable for reducing the reflection of information displays such as a CRT, LCD, plasma tube, etc., and is characterised by an improved pencil hardness and excellent optical properties. US-A-5 783 049 discloses an improved way to impart antireflection properties to light transmissive substrates and achieve a durable surface and electrical conductivity. WO-A-99/36262 discloses a multi-layered polymer film including a first set of optical layers and a second set of optical layers. The first set of optical layers is made from a polyester which is often birefringent. US-A-2010/062217 discloses an anti-glare anti-reflection film having a low haze and reduced unevenness and dazzle.

The film contains a thermoplastic resin film and at least a hard coat layer and an antireflection layer provided on a first surface of the thermoplastic resin film.

A graded index profile obtained by changing the concentration and/or size of nanoparticles and/or voids is disclosed in US 2013/0044282 A1 para.63 and fig.8

## SUMMARY

Conventional AR coating technology has limited applicability in certain situations including when there is flexing or stretching of the coating or the underlying device or structure. In addition to commonly inadequate mechanical robustness, as noted above, AR coating flexing or stretching can also result in dimensional and refractive index changes which are challenging for optical design. These issues are exacerbated for devices, or structures, which alter shape or dimension in use (e.g. wearable devices)

Conventional AR coating technology also has limited applicability when used for large area devices, or arrays, which are non-planar and present variable orientations to incident light. Such issues are also evident for devices on mobile platforms (e.g. cars, ships or planes) on which the relative orientation may vary because of the platform shape and during operation.

The invention is set out in the appended set of claims. The present invention, summarized above and discussed in greater detail below, can be understood by reference to the appended drawings..

## BRIEF DESCRIPTION OF DRAWINGS

Figure 1(a) shows an exemplary cross section of an AR skin with a single functional layer and optional top and bottom layers designed to serve as an interface between media 100 and 104.

Figures 1(b) and 1(c) show the AR skin of figure 1(a) when being axially stretched and flexed, respectively.

Figure 2 shows exemplary index (n) vs. thickness (t) profiles corresponding to the skin shown in Figures 1 (a), (b) and (c).

Figure 3(a) shows an exemplary cross section of a nano-structured layer with a protruding cone structure.

Figures 3(b) and 3(c) show the nano-structured layer of Figure 3(a) when being axially stretched or flexed, respectively.

Figure 4 shows index (n) vs. thickness (t) profiles corresponding to the skin in Figures 3 (a), (b) and (c).

## DETAILED DESCRIPTION

In the following detailed description, numerous specific details are set forth in order to provide a thorough understanding of the invention. However, it will be understood that these embodiments and examples may be practiced without the specific details. In other instances, well-known methods, procedures, components and circuits have not been described in detail, so as not to obscure the following description. Further, the embodiments disclosed are for exemplary purposes only and other embodiments may be employed in lieu of, or in combination with, the embodiments disclosed.

Structure:

The Anti-Reflective (AR) articles described herein are discrete (i.e., freestanding or self-supporting) films or skins which are resilient to significant mechanical or functional degradation or failure when stretched and, or flexed in the course of deployment or use. They are preferably comprised of ductile materials, if a single deployment is sufficient, or elastic materials if repeated or continuous bi-directional modification is required during use. In cases where the skin is comprised of multiple-layers the physical properties of the constituent layers should be sufficiently similar to maintain the integrity of the skin under conditions of use without mechanical or functional degradation. Examples of suitable skin materials include standard polymeric materials which meet the requirements of the given application.

The skins should also comprise appropriate materials or surfaces to facilitate interfacing with the two media which are being interfaced. Such interfacing may be achieved in a number of conventional ways by structural, chemical, thermal, mechanical, electrical or other means and may include optional surface layers or materials to assist the interfacing process. Examples of such surface layers include layers comprised of standard adhesives.

The skins may have any of a number of transverse structures which enable their AR performance. They may be comprised of mono-layers, which have constant, graded or varied refractive index. They may be comprised of a multi-layer where the layers have an engineered progression of refractive index. They may include nano-structured or nano-composite layers or surfaces which can provide a wider range of engineered refractive index profiles than dense or single material layers. It may also be appropriate to employ AR skin which includes an interference stack of materials although such structures may have a narrower operational range when subject to flexing and stretching.

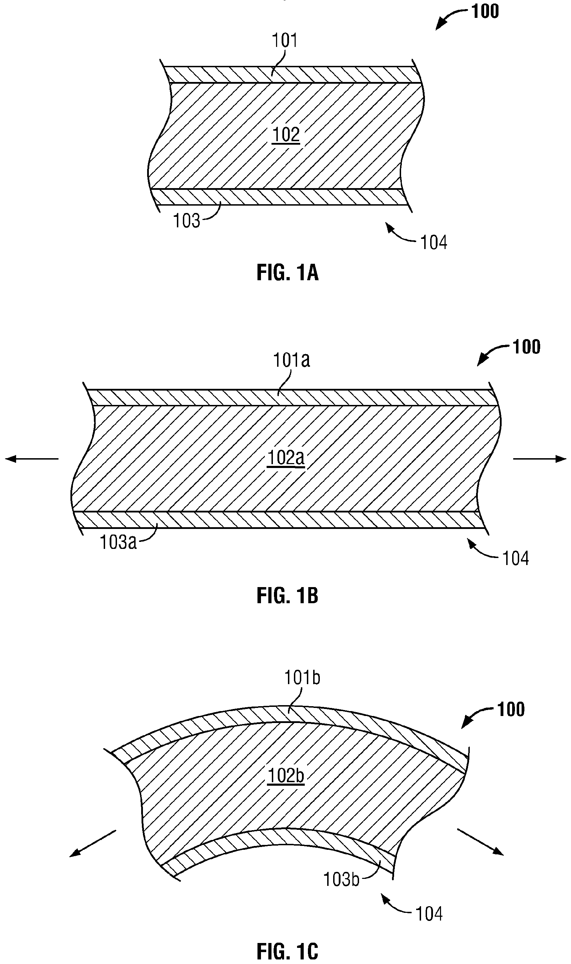

Figure 1(a) depicts an exemplary cross section of an AR skin with a single functional layer 102 and optional top and bottom layers 101 and 103, designed to serve as an interface between media 100 and 104. Figure 1(b) & 1(c) refer to the same cross section when axially stretched and flexed, respectively. Multi-layer, or multi-step, structures may be considered to behave as the combinations of single layer structures with additive effects.

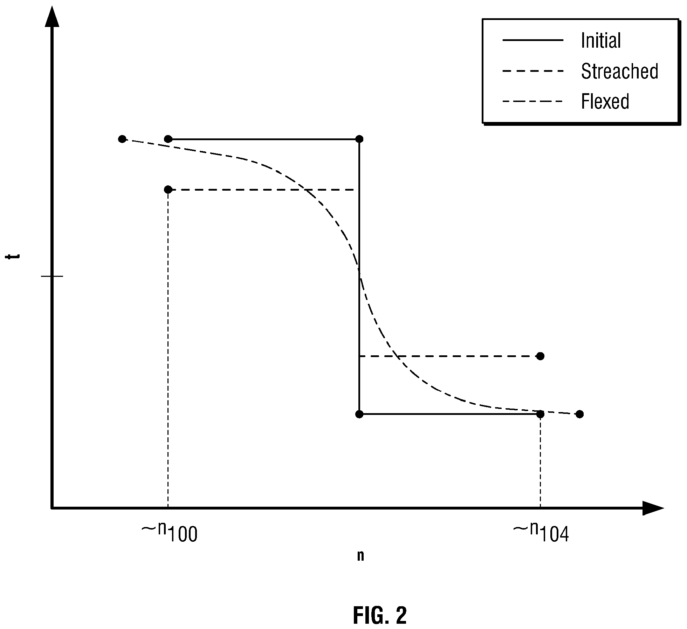

Figure 2, depicts exemplary index (n) vs. thickness (t) profiles corresponding to the skin in Figures 1 (a), (b) and (c). For this illustration the material layers are considered to be substantially compliant when stretched. When flexed, there can be stretching of the top surface and compression of the bottom surface, which result in dimensional, density and refractive index changes from top to bottom.

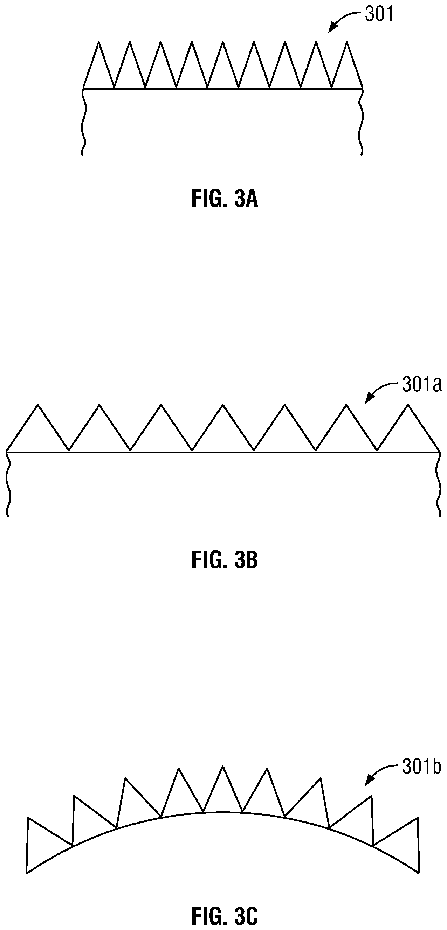

Figure 3(a) depicts an exemplary cross section of a nano-structured layer, with a protruding cone structure. Figures 3(b) and 3(c) depict the same layer when axially stretched or flexed, respectively.

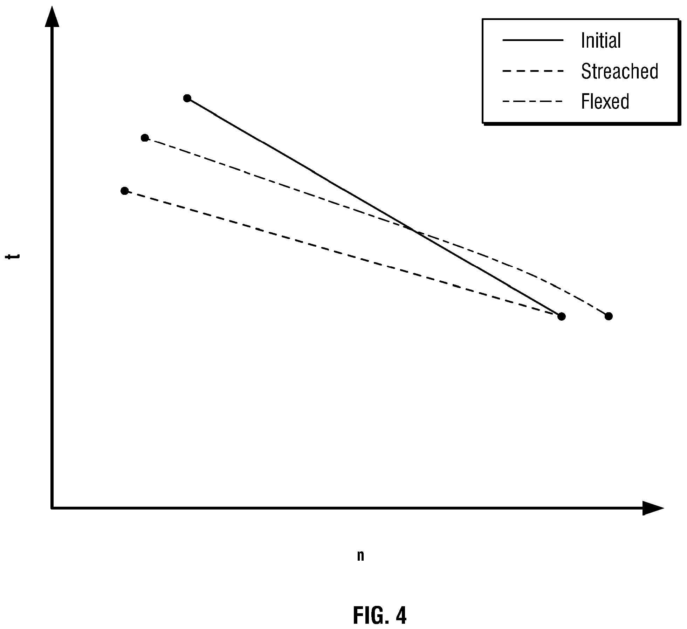

Figure 4 depicts exemplary index (n) vs. thickness (t) profiles corresponding to the skin in Figures 3 (a), (b) and (c). The structure has an initial graded index profile due to the porosity, the gradient of which increases with axial stretching. Under flexing can be an asymmetric top to bottom change in the periodicity, density and index.

AR Functionality:

The flexible AR skin should be sufficiently transparent to function in the desired range of electromagnetic frequencies which may be in the ultra-violet, visible or infra red regions of the spectrum.

It will be appreciated that the thickness and refractive index of respective layers in the flexible AR skin should be in a range that any changes in these parameters induced by stretching or flexing during deployment or use will be insufficient to substantially degrade the AR characteristics of the skin from its performance before deformation.

Materials with suitable properties include various polymers which are appropriately, transparent and elastic, or ductile. Depending on the optical structure employed they should also be suitable for chemical, or structural, modifiable to provide index variations, for patterning, or loading with a high index particles, including nano-particles. Examples include polymers which are polyethelene or polypropylene or fluoro-polymers such as ETFE and PVDF and modifications thereof which have an accessible range of refractive index which can be tailored between those of air through glass to semiconductors by various means which will be described below.

Flexible AR skin structures may be employed for air-to-air (where the skin itself may function as a window), air-to-glass (for passive optical components) and air-to-semiconductor (for active photonic components) interfaces. Of course, the flexible AR skin structures may used as an interface between other media as well.

A flexible AR skin not falling under the scope of protection and being for use as an air-to-air interface may comprise a monolithic ETFE skin with top and bottom surfaces both being nano-structured. The nano-structuring would be designed either to provide a step index profile with an outer layer structure having a refractive index close to the geometric mean (~1.14) between air and ETFE (~1.3), or more preferably, a graded index profile on each face. The thickness, or depth, of the skin and the nano-structuring should be sufficient for mechanical integrity. Also, the dimension and/or the periodicity of the nano-structuring should be appropriate to sustain the AR performance over the range of stretching and, or flexing that the skin will encounter in use. The nano-texturing may also enhance the wide angle performance of the skin.

One embodiment of the invention comprises a flexible AR skin for use as an air-to-glass interface and comprises a monolithic ETFE skin. Since the refractive index of ETFE (~1.3) is greater than the geometric mean (1.22) of the air-to-glass interface, nano-structuring of the outer layer of the skin may be beneficial for AR performance. A graded, or step-index multi-layer AR structure according to the invention is less reflective and is engineered by diffusion or other doping of the ETFE with an index increasing dopant from the "glass" interface. For multi-layer solutions different levels or types of doping can be implemented in individual batches of the polymer or precursors followed by the sequential deposition of layers during the fabrication of the skin.

Air-to-semi-conductor AR skin implementations are challenging, in so far as the index difference between the media is large and standard polymer material options. For example, the geometric mean index for air and c-Si is ~1.88. A multi-layer, composite skin can be formed from sequential layers of a polymer, for example ETFE, which are loaded with increasing levels of high refractive index nano-particles towards the semi-conductor interface. The level of loading, nano-particle dimensions and distribution, and the nature and refractive index of the materials, may be engineered to maintain stretchability, flexibility and transparency of the composite. Candidate materials for the nano-particles, with reflective indices in the range of 2.5-3.5, include refractory oxides (e.g. $TiO_2$) and transparent chalcogenides (S, Se, Te) of Zn, or Cd.

An AR skin for use on an unencapsulated c-Si PV cell or module, could include a ETFE polymer material of about 5-10 micron thickness substantially >10% loaded with $TiO_2$ nano-particles at the interface with the cell and optional multi-layers with a top layer comprising of conically structured ETFE interfacing to air. This top layer also providing wide angle performance to accommodate deployment of the device under varying angles of illumination.

Substrates and Platforms:

Many preferred embodiments of the invention are directed to addressing AR functionality, for applications involving non-planar, flexible, mobile and shape-changing substrates or platforms

A preferred embodiment for a non-planar, and flexible, substrate is the application of an AR skin to flexible PV devices including large area arrays. In such an application the AR skin should accommodate and perform during any flexing of the PV device, for example on it's deployment on a contoured structure or platform. Furthermore, since the reflectivity and performance of such a PV device is markedly dependent on orientation to incident solar radiation, an AR skin which is designed for wide angle performance, e.g. the incorporation of a nano-structured surface layer in the AR skin can be extremely beneficial.

Preferred embodiments for mobile platforms including cars, ships and planes, can likewise include non-planar surfaces (e.g. a car top or fuselage) as well as the variations in the relative angle of incidence from a defined source during operation. As above embodiments which include wide-angle AR performance are preferred.

Preferred embodiments, for platforms which change shape during use, including inflatable or wearable platforms require both a high resilience of AR performance to stretching or flexing and wide angle performance. It is also critical that the AR skin be elastic to allow for continued usage.

Tunability:

In contrast to the above examples, which are centered on the substantially invariant performance of an AR skin when deployed on various platform and devices, another range of preferred embodiments centers on the ability to tune or adjust the intensity and, or wavelength of reflectivity of an AR skin. Such preferred embodiments may involve sensitizing the AR skin designs in terms of tailoring thickness and optical characteristics to be near some critical point for changing AR performance by stretching, flexing or otherwise changing the shape of a skin within a range which is accessible by the influence of an external stimulus, which could include a mechanical, thermal or electrical means of controlled flexing or stretching of the skin. For example by inflation, or by activating a piezo-electric element to induce stretching to reduce the index and/or layer thickness below a critical value.

In the simplest case a preferred embodiment could be used to tune the skin for optimized AR performance at a given wavelength. Another preferred embodiment is for reducing transmission intensity by increasing reflectivity, for example in order to prevent saturation of sensory devices. Another preferred embodiment is to adjust the wavelength, intensity or modulation of reflected light for optical tagging or camouflage applications.

# EP 3 195 024 B1

**Claims**

1. A self-supporting anti-reflective AR film or skin to be disposed between first (100) and second (104) media wherein the first medium (100) is air and the second medium (104) is glass, for use as an air-to-glass interface, the self-supporting anti-reflective AR film or skin comprising:

   at least one layer (102) at least partially transparent to optical energy at one or more optical wavelengths, the at least one layer (102) being substantially flexible and/or stretchable and having a refractive index profile which imparts anti-reflection AR behavior for incident light when used as an optical interface between the first and second media; and
   wherein the AR behavior is retained when the at least one layer (102) is flexed and/or stretched;
   wherein the at least one layer (102) comprises a monolithic ETFE skin; and
   wherein a graded, or step-index multi-layer AR structure is engineered by diffusion or other doping of the monolithic ETFE skin with an index increasing dopant from its glass interface.

2. The self-supporting AR film or skin of claim 1, wherein the at least one layer includes a plurality of layers (101, 102, 103) formed from different materials, the physical properties of the constituent layers being sufficiently similar to maintain the integrity of the skin under conditions of use without mechanical or functional degradation.

3. The self-supporting AR film or skin of either preceding claim, wherein the refractive index profile of the layer is tunable by chemical modification, structural modification, variable porosity, composite blending or loading of a base material.

4. The self-supporting AR film or skin of any preceding claim, further comprising at least one bond for bonding the at least one layer to at least one of the media.

5. The self-supporting AR film or skin of any of claims 1 to 3, disposed between the first (100) and second (104) media, wherein one of the media is air; or wherein one of the media comprises an optical component or device, or wherein one of the media comprises an optical component or device which includes a plurality of devices.

6. The self-supporting AR film or skin of any preceding claim, wherein one or both media have surfaces that are planar, non-planar or irregular.

7. The self-supporting AR film or skin of any of claims 1 to 6, wherein the at least one layer includes a plurality of layers having progressively stepped refractive indices, an outermost of the layers being index matched to each of the first and second media for providing AR functionality.

8. The self-supporting AR film or skin of any preceding claim, wherein the at least one layer includes either an interference stack with alternating refractive index layers or an interference stack with alternating refractive index layers which is configured to impart broadband AR performance over a range of wavelengths of incident light.

9. The self-supporting AR film or skin of claim 5, wherein the optical device is a photovoltaic cell or array of photovoltaic cells, or wherein the optical device is a photovoltaic cell or array of photovoltaic cells which is flexible.

10. The self-supporting AR film or skin of any preceding claim, wherein the first media is, or is disposed on, a mobile platform, , or wherein the first media is, or is disposed on, a mobile platform which is selected from the group consisting of a car, ship, plane and spacecraft.

11. The self-supporting AR film or skin of claim 1, wherein the first media is a structure which alters shape in use, or wherein the first media is a structure which alters shape in use and is inflatable and/or deflatable, or wherein the first media is a structure which alters shape in use and is a wearable article.

12. The self-supporting AR film or skin of any preceding claim, wherein the AR behavior is tunable by flexing and/or stretching the at least one layer, or wherein the AR behavior is tunable by flexing and/or stretching the at least one layer and the flexing and/or stretching is activated by a mechanical, electrical or thermal stimulus, or wherein the AR behavior is tunable by flexing and/or stretching the at least one layer and the tuning is selectively localized across the at least one layer, or wherein the AR behavior is tunable by flexing and/or stretching the at least one layer and the tuning is used for optimizing the AR behavior at a given range of wavelengths and/or angles of incidence..

**13.** The self-supporting AR film or skin of claim 12, wherein the tuning is settable, periodic or continuously variable.

**Patentansprüche**

**1.** Selbsttragende entspiegelte Entspiegelungsfolie oder -Haut, die zwischen einem ersten (100) und einem zweiten (104) Medium angeordnet werden soll, wobei das erste Medium (100) Luft ist, und das zweite Medium (104) Glas ist, zur Verwendung als eine Luft-zu-Glas-Schnittfläche, wobei die selbsttragende entspiegelte Entspiegelungsfolie oder -Haut umfasst:

mindestens eine erste Schicht (102), die mindestens teilweise für optische Energie mit einer oder mehreren optischen Wellenlängen durchlässig ist, wobei die mindestens eine Schicht (102) im Wesentlichen biegsam und/oder dehnbar ist und ein Brechungsindexprofil aufweist, das ein Entspiegelungsverhalten für einfallendes Licht verleiht, wenn sie als eine optische Schnittfläche zwischen dem ersten und dem zweiten Medium verwendet wird; und
wobei das Entspiegelungsverhalten beibehalten wird, wenn die mindestens eine Schicht (102) gebogen und oder gedehnt wird;
wobei die mindestens eine Schicht (102) eine monolithische ETFE-Haut umfasst; und
wobei eine abgestufte oder Stufenindex-Mehrschichten-Entspiegelungsstruktur durch Diffusion oder durch anderes Dotieren der monolithischen ETFE-Haut mit einem indexsteigernden Dotierstoff von ihrer Glasschnittfläche her konstruiert ist.

**2.** Selbsttragende Entspiegelungsfolie oder -Haut nach Anspruch 1, wobei die mindestens eine Schicht eine Vielzahl von Schichten (101, 102, 103) beinhaltet, die aus unterschiedlichen Materialien gebildet sind, wobei die physischen Eigenschaften der Bestandteilschichten ausreichend ähnlich sind, um die Integrität der Haut unter Nutzungsbedingungen ohne mechanische oder funktionelle Verschlechterung aufrechtzuerhalten.

**3.** Selbsttragende Entspiegelungsfolie oder -Haut vom einem der vorstehenden Ansprüche, wobei das Brechungsindexprofil der Schicht durch chemische Modifikation, Strukturmodifikation, variable Porosität, Zusammensetzungsmischen oder Füllen eines Basismaterials abstimmbar ist.

**4.** Selbsttragende Entspiegelungsfolie oder -Haut nach einem vorstehenden Anspruch, die weiter mindestens eine Bindung zum Binden der mindestens einen Schicht an mindestens eines der Medien umfasst.

**5.** Selbsttragende Entspiegelungsfolie oder -Haut nach einem der Ansprüche 1 bis 3, die zwischen dem ersten (100) und dem zweiten (104) Medium angeordnet ist, wobei eines der Medien Luft ist; oder wobei eines der Medien ein optisches Bauteil oder eine optische Vorrichtung umfasst, oder wobei eines der Medien ein optisches Bauteil oder eine optische Vorrichtung umfasst, das/die eine Vielzahl von Vorrichtungen beinhaltet.

**6.** Selbsttragende Entspiegelungsfolie oder -Haut nach einem vorstehenden Anspruch, wobei eines oder beide Medien Oberflächen aufweisen, die planar, nichtplanar oder unregelmäßig sind.

**7.** Selbsttragende Entspiegelungsfolie oder -Haut nach einem der Ansprüche 1 bis 6, wobei die mindestens eine Schicht eine Vielzahl von Schichten beinhaltet, die allmählich abgestufte Brechungsindices aufweisen, wobei eine äußerste der Schichten einen Index aufweist, der mit jedem des ersten und des zweiten Mediums zum Bereitstellen von Entspiegelungsfunktionalität übereinstimmt.

**8.** Selbsttragende Entspiegelungsfolie oder -Haut nach einem vorstehenden Anspruch, wobei die mindestens eine Schicht entweder einen Interferenzstapel mit abwechselnden Brechungsindexschichten oder einen Interferenzstapel mit abwechselnden Brechungsindexschichten, der konfiguriert ist, um Breitband-Entspiegelungsleistungsfähigkeit über einen Bereich von Wellenlängen einfallenden Lichts zu verleihen, beinhaltet.

**9.** Selbsttragende Entspiegelungsfolie oder -Haut nach Anspruch 5, wobei die optische Vorrichtung eine fotovoltaische Zelle oder ein Array fotovoltaischer Zellen ist, oder wobei die optische Vorrichtung eine fotovoltaische Zelle oder ein Array fotovoltaischer Zellen ist, die/das biegsam ist.

**10.** Selbsttragende Entspiegelungsfolie oder -Haut nach einem vorstehenden Anspruch, wobei das erste Medium eine mobile Plattform ist oder darauf angeordnet ist, oder wobei das erste Medium eine mobile Plattform, die aus der Gruppe ausgewählt ist, die aus einem Kraftfahrzeug, einem Schiff, einem Flugzeug und einem Raumfahrzeug besteht, ist oder darauf angeordnet ist.

11. Selbsttragende Entspiegelungsfolie oder -Haut nach Anspruch 1, wobei das erste Medium eine Struktur ist, die bei Verwendung die Form wechselt, oder wobei das erste Medium eine Struktur ist, die bei Verwendung die Form wechselt und aufblasbar und/oder auslassbar ist, oder wobei das erste Medium eine Struktur ist, die bei Verwendung die Form wechselt und ein anziehbarer Artikel ist.

12. Selbsttragende Entspiegelungsfolie oder -Haut nach einem vorstehenden Anspruch, wobei das Entspiegelungsverhalten durch Biegen und/oder Dehnen der mindestens einen Schicht abstimmbar ist, oder wobei das Entspiegelungsverhalten durch Biegen und/oder Dehnen der mindestens einen Schicht abstimmbar ist, und das Biegen und/oder Dehnen durch eine mechanische, elektrische oder thermische Anregung aktiviert wird, oder wobei das Entspiegelungsverhalten durch Biegen und/oder Dehnen der mindestens einen Schicht abstimmbar ist, und das Abstimmen selektiv über die mindestens eine Schicht lokalisiert ist, oder wobei das Entspiegelungsverhalten durch Biegen und/oder Dehnen der mindestens einen Schicht abstimmbar ist, und das Abstimmen zum Optimieren des Entspiegelungsverhaltens in einem gegebenen Bereich von Wellenlängen und/oder Einfallswinkeln verwendet wird.

13. Selbsttragende Entspiegelungsfolie oder -Haut nach Anspruch 12, wobei das Abstimmen einstellbar, periodisch oder kontinuierlich variabel ist.

## Revendications

1. Film, ou revêtement, antireflet, AR, autoporteur qui doit être disposé entre des premier (100) et second (104) supports, dans lequel le premier support (100) est de l'air et le second support (104) est du verre, destiné à être utilisé comme interface air-verre, le film, ou revêtement, antireflet, AR, autoporteur comprenant :

   au moins une couche (102) au moins partiellement transparente à de l'énergie optique à une ou plusieurs longueurs d'onde optiques, la au moins une couche (102) étant sensiblement souple et/ou extensible et présentant un profil d'indice de réfraction qui donne un comportement antireflet, AR, pour une lumière incidente lorsqu'elle est utilisée comme interface optique entre les premier et second supports ; et
   dans lequel le comportement AR est retenu lorsque la au moins une couche (102) est fléchie et/ou étirée ;
   dans lequel la au moins une couche (102) comprend un revêtement ETFE monolithique ; et
   dans lequel une structure AR multicouche à saut d'indice ou à gradient d'indice est conçue par diffusion ou un autre dopage du revêtement ETFE monolithique avec un dopant augmentant l'indice à partir de son interface en verre.

2. Film, ou revêtement, AR, autoporteur selon la revendication 1, dans lequel la au moins une couche inclut une pluralité de couches (101, 102, 103) formées de différents matériaux, les propriétés physiques des couches constitutives étant suffisamment similaires pour maintenir l'intégrité du revêtement dans des conditions d'utilisation sans dégradation mécanique ou fonctionnelle.

3. Film, ou revêtement, AR, autoporteur selon l'une ou l'autre revendication précédente, dans lequel le profil d'indice de réfraction est ajustable par modification chimique, modification structurelle, porosité variable, par mélange ou chargement de composite d'un matériau de base.

4. Film, ou revêtement, AR, autoporteur selon l'une quelconque des revendications précédentes, comprenant en outre au moins une liaison pour lier la au moins une couche à au moins l'un des supports.

5. Film, ou revêtement, AR, autoporteur selon l'une quelconque des revendications 1 à 3, disposé entre les premier (100) et second (104) supports, dans lequel l'un des supports est l'air; ou dans lequel l'un des supports comprend un composant, ou un dispositif, optique ou dans lequel l'un des supports comprend un composant, ou un dispositif, optique qui inclut une pluralité de dispositifs.

6. Film, ou revêtement, AR, autoporteur selon l'une quelconque des revendications précédentes, dans lequel un ou les deux supports présentent des surfaces qui sont planes, non planes ou irrégulières.

7. Film, ou revêtement, AR, autoporteur selon l'une quelconque des revendications 1 à 6, dans lequel la au moins une couche inclut une pluralité de couches présentant des indices de réfraction progressivement échelonnés, la couche située le plus à l'extérieur des couches présentant un indice correspondant à chacun des premier et second supports pour fournir une fonctionnalité AR.

8. Film, ou revêtement, AR, autoporteur selon l'une quelconque des revendications précédentes, dans lequel la au moins une couche inclut soit un empilement d'interférence avec des couches alternées à indice de réfraction, soit un empilement d'interférences avec des couches alternées à indice de réfraction qui est configuré pour donner une performance AR à large bande sur une plage de longueurs d'onde de lumière incidente.

9. Film, ou revêtement, AR, autoporteur selon la revendication 5, dans lequel le dispositif optique est une cellule photovoltaïque ou un réseau de cellules photovoltaïques ou dans lequel le dispositif optique est une cellule photovoltaïque ou un réseau de cellules photovoltaïques qui est souple.

10. Film, ou revêtement, AR, autoporteur selon l'une quelconque des revendications précédentes, dans lequel le premier support est, ou est disposé sur, une plate-forme mobile ou dans lequel le premier support est, ou est disposé sur, une plate-forme mobile qui est sélectionnée dans le groupe constitué d'une voiture, d'un navire, d'un avion et d'un engin spatial.

11. Film, ou revêtement, AR, autoporteur selon la revendication 1, dans lequel le premier support est une structure qui modifie la forme lors de l'utilisation ou dans lequel le premier support est une structure qui modifie la forme lors de l'utilisation et peut être gonflée et/ou dégonflée ou dans lequel le premier support est une structure qui modifie la forme lors de l'utilisation et est un article vestimentaire.

12. Film, ou revêtement, AR, autoporteur selon l'une quelconque des revendications précédentes, dans lequel le comportement AR est ajustable par flexion et/ou étirement de la au moins une couche ou dans lequel le comportement AR est ajustable par flexion et/ou étirement de la au moins une couche et la flexion et/ou l'étirement est activé par un stimulus mécanique, électrique ou thermique ou dans lequel le comportement AR est ajustable par flexion et/ou étirement de la au moins une couche et le réglage est localisé de manière sélective à travers la au moins une couche ou dans lequel le comportement AR est ajustable par flexion et/ou étirement de la au moins une couche et le réglage est utilisé pour optimiser le comportement AR à une plage donnée de longueurs d'onde et/ou d'angles d'incidence.

13. Film, ou revêtement, AR, autoporteur selon la revendication 12, dans lequel le réglage est réglable, périodique ou continuellement variable.

100

101

102

103

104

**FIG. 1A**

100

101a

102a

103a

104

**FIG. 1B**

100

101b

102b

103b

104

**FIG. 1C**

FIG. 2

EP 3 195 024 B1

301

**FIG. 3A**

301a

**FIG. 3B**

301b

**FIG. 3C**

FIG. 4

EP 3 195 024 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013004711 A
- EP 0945254 A
- US 5783049 A
- WO 9936262 A
- US 2010062217 A
- US 20130044282 A1